# EUROPÄISCHE PATENTSCHRIFT

(11) **EP 4 033 878 B1**
(45) Veröffentlichungstag und Bekanntmachung des Hinweises auf die Patenterteilung: **10.12.2025**
(21) Anmeldenummer: 20772064.0
(22) Anmeldetag: 17.09.2020
(51) Int. Cl.: A01D 34/08, B62D 51/06, A01B 69/00

(54) **EINACHSGERÄTETRÄGER**
SINGLE AXLE DEVICE HOLDER
SUPPORT D'APPAREIL À UN ESSIEU

(30) Priorität: 25.09.2019 EP 19199477
(43) Veröffentlichungstag der Anmeldung: 03.08.2022
(73) Patentinhaber: Altatek GmbH, 7106 Tenna (CH)
(72) Erfinder: BUCHLI, Thomas, 7106 Tenna (CH); MODALEK, Peter, 7015 Tamins (CH); NIELSEN, Einar, 8004 Zürich (CH); LANDIS, Stefan, 8820 Wädenswil (CH); HAUSER, Romano, 8752 Näfels (CH)
(74) Vertreter: Rutz, Andrea
(86) Internationale Anmeldenummer: PCT/EP2020/076018
(87) Internationale Veröffentlichungsnummer: WO 2021/058377

(56) Entgegenhaltungen:
- EP-A1- 0 347 946
- CN-A- 105 794 389
- DE-A1- 102008 054 620
- US-A1- 2014 121 881

## Beschreibung

### TECHNISCHES GEBIET

Die vorliegende Erfindung betrifft einen Einachsgeräteträger, an welchen eines oder mehrere Anbaugeräte, wie insbesondere ein Mähbalken, anbringbar sind. Derartige Einachsgeräteträger sind insbesondere in der Landwirtschaft bekannt, wo sie zum Beispiel zum Mähen von Wiesen und/oder zur Bodenbearbeitung in unwegsamem Gelände oft benutzt werden. Die Erfindung bezieht sich ausserdem auf eine Einachsgeräteeinheit umfassend einen derartigen Einachsgeräteträger sowie auf ein Arbeitsmaschinensystem mit mehreren derartigen Einachsgeräteträgern.

### STAND DER TECHNIK

In der Landwirtschaft sind Arbeitsmaschinen zum Beispiel zur Bodenbearbeitung oder zum Mähen von Wiesen bereits seit längerem unentbehrlich geworden. Dies gilt auch für die Berglandwirtschaft, wo sich bei der Bearbeitung von Steilhängen jedoch besondere Herausforderungen stellen. Während grossflächige ebene Felder mit Hilfe von Grossmaschinen auch mit verhältnismässig wenig Personalaufwand effizient bearbeitet werden können, ist die Bearbeitung in Hanglagen immer noch mit viel Handarbeit und entsprechendem Personaleinsatz verbunden. Wenn in der Berglandwirtschaft Arbeitsmaschinen eingesetzt werden, handelt es sich oft um kleinere Maschinen, welche zur gleichzeitigen Bearbeitung von verhältnismässig kleinen Flächen geeignet sind und vom Landwirt trotzdem permanent bedient und nicht selten unter Anwendung von Muskelkraft gesteuert werden müssen.

Eine solche Arbeitsmaschine, welche insbesondere in Hanglagen oft eingesetzt wird, ist der einachsige Balkenmäher. Einachsige Balkenmäher umfassen üblicherweise einen von einem Verbrennungsmotor angetriebenen Einachsgeräteträger, an den ein Anbaugerät in Form eines Mähbalkens anbringbar ist. Einachsgeräteträger, manchmal auch Einachsschlepper genannt, haben üblicherweise zwei an einer gemeinsamen Antriebsachse angebrachte Räder, welche durch einen Benzin- oder Dieselmotor mittels mechanischem Getriebe oder auch hydrostatisch angetrieben sind. Gelenkt wird der Einachsgeräteträger in der Regel von einem hinter der Maschine hergehenden Bediener. Zum leichteren Lenken des Schleppers können Differentiale sowie Einzelradkupplungen und/oder -bremsen eingebaut sein.

Einachsgeräteträger mit daran angebrachtem Mähbalken zeichnen sich vor allem durch ihre grosse Wendigkeit und die durch das vergleichsweise niedrige Gewicht gegebene Bodenschonung aus. Aufgrund ihres meist tiefliegenden Schwerpunkts sind sie zudem auch in Steilhängen und in ruppigem Gelände noch stabil steuerbar.

Viele gebräuchliche Einachsgeräteträger sind zum Anbringen von unterschiedlichen Anbaugeräten ausgebildet. So können zum Beispiel Mähwerke, Bandrechen, Mulchgeräte, Schneeschieber und -fräsen, Reinigungsgeräte oder Heuschieber daran angebracht werden. Dadurch sind Einachsgeräteträger meist sehr vielseitig für unterschiedliche Anwendungen einsetzbar. Ausser in der Landwirtschaft sind Einachsgeräteträger deshalb auch im Kommunalbereich gebräuchlich.

Die Steuerung des Einachsgeräteträgers bzw. Balkenmähers erfolgt üblicherweise also durch den Landwirt, der den Mäher über die gesamte zu bearbeitende Arbeitsfläche begleiten und in oft kräftezehrender Art und Weise um und über Hindernisse herum bzw. hinweg steuern muss.

Beispielsweise offenbart die EP 0 347 946 A1 ein von Hand bedienbares Mähgerät. Das Mähgerät liegt einerseits mit den beiden Laufrädern sowie einer unterhalb der Messerbalken angeordneten Gleitkufe auf dem Boden auf.

Einige Balkenmäher, so zum Beispiel ein Balkenmäher der Firma Brielmaier Baumaschinen GmbH in Ravensburg, Deutschland, sind bekannt, welche über eine elektronische Handsteuerung verfügen oder sogar mittels Fernbedienung gesteuert werden können und dadurch erheblich bedienerfreundlicher sind. Nichtsdestotrotz ist auch bei diesen Mähern die Anwesenheit von Bedienpersonal während des gesamten Mähvorgangs notwendig.

### DARSTELLUNG DER ERFINDUNG

Es ist eine Aufgabe der vorliegenden Erfindung, einen Einachsgeräteträger anzugeben, der besonders einfach zu bedienen ist. Zur Lösung dieser Aufgabe wird ein Einachsgeräteträger vorgeschlagen, wie er in Anspruch 1 angegeben ist. Ausserdem wird in Anspruch 9 eine Einachsgeräteeinheit umfassend einen derartigen Einachsgeräteträger sowie in Anspruch 11 ein Arbeitsmaschinensystem mit mehreren solchen Einachsgeräteträgern angegeben. Vorteilhafte Ausgestaltungen der Erfindung sind in den abhängigen Ansprüchen angegeben.

Die vorliegende Erfindung stellt also einen Einachsgeräteträger zur Verfügung, an welchen eines oder mehrere Anbaugeräte, wie insbesondere ein Mähbalken, anbringbar sind. Der Einachsgeräteträger weist auf
ein Fahrgestell,
einen Elektroantrieb, sowie
eine Antriebsachse, welche vom Elektroantrieb antreibbar ist, um den Einachsgeräteträger über eine Arbeitsfläche zu bewegen,
wobei die Position des Schwerpunkts des Einachsgeräteträgers relativ zur Antriebsachse mittels Verschieben der Antriebsachse relativ zum Fahrgestell veränderbar ist, um die Auflagekraft des Anbaugeräts auf der Arbeitsfläche zu regulieren.

Indem die Position des Schwerpunkts des Einachsgeräteträgers relativ zur Antriebsachse veränderbar ist, kann der Einachsgeräteträger in Steilhängen und bei Unebenheiten der Arbeitsfläche eine erheblich stabilere Lage einnehmen. So kann die Antriebsachse bei einer Aufwärtsfahrt zum Beispiel hinter den Schwerpunkt verschoben werden und bei einer Abwärtsfahrt vor den Schwerpunkt, so dass die Auflagekraft des Anbaugeräts auf der Arbeitsfläche ungefähr konstant bleibt. Ein Kippen des Einachsgeräteträgers kann dadurch eher verhindert werden bzw. der Einachsgeräteträger kann dadurch steilere Anstiege und Abhänge bewältigen. Ausserdem kann mittels Verändern der Position des Schwerpunkts relativ zur Antriebsachse das Anbaugerät von der Arbeitsfläche, das heisst vom Boden, angehoben und abgesenkt werden. Dies ist insbesondere dann nützlich, wenn der Einachsgeräteträger gewendet werden soll oder wenn Hindernisse um- oder überfahren werden müssen.

Die Verwendung eines Elektroantriebs, insbesondere eines Elektromotors, statt eines Verbrennungsmotors hat neben den bekannten ökologischen Aspekten den Vorteil, dass der Einachsgeräteträger wesentlich ruhiger wird und zudem die elektrische Energie auch zum Verändern der Position des Schwerpunkts relativ zur Antriebsachse verwendbar ist. Hierfür kann insbesondere ein Elektromotor, wie zum Beispiel ein Servomotor, eingesetzt werden, um eine schnelle und genaue Anpassung der Position der Antriebsachse relativ zum Schwerpunkt zu ermöglichen. Auf diese Weise kann die Auflagekraft des Anbaugeräts auf der Arbeitsfläche sehr schnell, kontinuierlich und präzis reguliert werden. Wenn der Einachsgeräteträger zusätzlich zum Elektroantrieb einen Energiespeicher, wie insbesondere einen wiederaufladbaren Energiespeicher aufweist, hat dies den weiteren Vorteil, dass sich der Einachsgeräteträger dadurch wesentlich besser zur autonomen Manövrierung und Bearbeitung der Arbeitsfläche eignet, indem er z.B. selbsttätig nach einer gewissen Zeit zu einer Ladestation fährt, um den Energiespeicher aufzuladen.

Das Anbaugerät kann fest am Einachsgeräteträger angebracht sein, das heisst, dass ein Wechsel durch den Bediener nicht vorgesehen und nur mit spezialisierten Kenntnissen und/oder speziellem Werkzeug möglich ist. Vorzugsweise sind jedoch eine Vielzahl von unterschiedlichen Anbaugeräten am Einachsgeräteträger anbringbar, so dass der Einachsgeräteträger vielseitig und für unterschiedliche Anwendungen einsetzbar ist. Der Einachsgeräteträger kann hierzu einen zusätzlichen Antrieb aufweisen, insbesondere einen zusätzlichen Elektroantrieb, zum Antreiben des jeweils am Einachsgeräteträger angebrachten Anbaugerät. Das Anbaugerät kann aber, zum Beispiel via ein Getriebe, auch von demselben Elektroantrieb angetrieben werden, der auch die Antriebsachse antreibt.

Bei dem oder den an den Einachsgeräteträger anbringbaren Anbaugeräten kann es sich beispielsweise ein Mähwerk, einen Mähbalken, einen Bandrechen, ein Mulchgerät, einen Schneeschieber, eine Schneefräse, ein Reinigungsgerät oder einen Heuschieber handeln. Der Einachsgeräteträger kann dadurch zum Einsatz in der Landwirtschaft, im Kommunalbereich und/oder in der Landschaftspflege vorgesehen sein. In der Landschaftspflege kann er zum Beispiel zum Landschaftsschutz dienen, wie insbesondere in Feucht- und Moorgebieten.

Im Falle, dass ein Anbaugerät in Form eines Mähbalkens am Einachsgeräteträger angebracht ist, kann die entsprechende Einachsgeräteeinheit auch als einachsiger Balkenmäher bezeichnet werden.

Der Einachsgeräteträger weist üblicherweise eine einzige Radachse auf, bei welcher es sich um die genannte Antriebsachse handelt. An der Antriebsachse ist in der Regel ein Räderpaar angebracht, insbesondere drehfest angebracht. Beim bestimmungsgemässen Einsatz des Einachsgeräteträgers bildet das Räderpaar, mit Ausnahme des Anbaugeräts, bevorzugt überwiegend den einzigen Kontakt der Einachsgeräteeinheit zur Arbeitsfläche. Allenfalls können am Einachsgeräteträger Kippschutzelemente in Form von zum Beispiel Kufen oder Zusatzrädern angebracht sein, um ein Verkippen der Maschine zu verhindern. In alternativen Ausführungsformen ist auch das Vorsehen von Stützrädern am Anbaugerät und/oder am Einachsgeräteträger möglich. Die Antriebsachse bildet in jedem Fall jedoch die Hauptfahrzeugachse des Einachsgeräteträgers. Wenn die Antriebsachse durch den Elektroantrieb angetrieben wird, werden die bevorzugt drehfest daran angebrachten Räder gedreht, wodurch der Einachsgeräteträger in Bewegung versetzt und über die Arbeitsfläche bewegt wird.

Das Fahrgestell bildet in der Regel das tragende Konstruktion des Einachsgeräteträgers. Am Fahrstell sind bevorzugt der Elektroantrieb und die Antriebsachse sowie, falls vorhanden, der Energiespeicher befestigt. Ausserdem werden vorteilhaft auch das oder die Anbaugeräte, allenfalls via einen Adapter, am Fahrgestell angebracht.

Um die Position des Schwerpunkts des Einachsgeräteträgers relativ zur Antriebsachse zu verändern, kann der Schwerpunkt des Einachsgeräteträgers, zum Beispiel mittels Verschieben von Gewichtskomponenten, relativ zur Antriebsachse verschoben werden und/oder die Antriebsachse kann relativ zum Schwerpunkt verschoben werden. Ob die Position des Schwerpunkts relativ zur Antriebsachse oder die Antriebsachse relativ zur Position des Schwerpunkts veränderbar ist, ist aber letztendlich insofern unerheblich, als es sich hierbei lediglich um zwei unterschiedliche Formulierungen handelt, die jeweils ein und denselben Sachverhalt betreffen: In beiden Fällen ist eine Veränderung der Position von Schwerpunkt und Antriebsachse *relativ zueinander* gemeint. Ob dabei nur der Schwerpunkt oder nur die Antriebsachse oder beide zusammen bewegt bzw. verschoben werden, ist letztendlich nur eine Frage des gewählten Bezugssystems.

Zum Verschieben der Antriebsachse relativ zum Schwerpunkt können grundsätzlich nur die Antriebsachse oder nur der Schwerpunkt oder beide zusammen relativ zum Fahrgestell verschoben werden. In Bezug auf die erwähnte Formulierung, dass sich "nur die Antriebsachse relativ zum Fahrgestell verschiebt", wird der Einfachheit halber der Umstand vernachlässigt, dass sich beim Verschieben der Antriebsachse zwangsläufig auch der Schwerpunkt des Einachsgeräteträgers geringfügig mitverschiebt.

Die Veränderung der Position des Schwerpunkts des Einachsgeräteträgers relativ zur Antriebsachse wird dadurch erreicht, dass die Antriebsachse relativ zum Fahrgestell verschoben wird. Die Verschiebung kann zum Beispiel mittels eines Linearmotors erreicht werden, oder eine an der Antriebsachse drehfest angebrachte Verzahnung kann hierzu, zum Beispiel via ein Getriebe, mit einer Zahnstange gekoppelt werden. Beim Verschieben der Antriebsachse relativ zum Fahrgestell kann je nach Ausführungsform der Elektroantrieb mitverschoben werden oder in seiner Position verbleiben.

Vorteilhaft ist die Antriebsachse linear entlang einer Hauptfahrtrichtung des Einachsgeräteträgers relativ zum Schwerpunkt des Einachsgeräteträgers verschiebbar. Auf diese Weist lässt sich die Auflagekraft des Anbaugeräts auf der Arbeitsfläche besonders gut regulieren.

Die Antriebsachse kann aber auch auf einer Kurvenbahn relativ zum Schwerpunkt, insbesondere zum Fahrgestell, verschiebbar sein. Eine Ausführungsform mit einer auf einer Kurvenbahn verschiebbaren Antriebsachse ergibt sich zum Beispiel, wenn es sich bei der Antriebsachse um eine gelenkig am Fahrgestell aufgehängte Pendelachse handelt.

Um eine gute Regulierung der Auflagekraft des Anbaugeräts auf der Arbeitsfläche zu erreichen, weist die Antriebsachse relativ zum Fahrgestell bevorzugt einen Verschiebeweg entlang einer Hauptfahrtrichtung des Einachsgeräteträgers auf, der mindestens anderthalbfach, bevorzugter sogar mindestens doppelt so lang ist wie der Abstand des Schwerpunktes des Einachsgeräteträgers zur Arbeitsfläche. Der Einachsgeräteträger kann dadurch auch in steilem Gelände noch sicher manövrieren. Vorteilhaft ist die Antriebsachse um mindestens 50%, insbesondere um mindestens 75%, der Gesamtlänge des Fahrgestells entlang einer Hauptfahrtrichtung des Einachsgeräteträgers verschiebbar. Mit anderen Worten beträgt die Länge des Verschiebewegs der Antriebsachse von ihrer hintersten Position in ihre vorderste Position entlang der Hauptfahrtrichtung des Einachsgeräteträgers vorteilhaft mindestens 50%, insbesondere um mindestens 75%, der Gesamtlänge des Fahrgestells.

Bei Ausführungsformen, bei denen nur der Schwerpunkt oder sowohl die Antriebsachse als auch der Schwerpunkt relativ zum Fahrgestell verschiebbar sind, kann der Einachsgeräteträger insbesondere eine Gewichtskomponente aufweisen, welche relativ zum Fahrgestell bewegbar ist. Bei der bewegbaren Gewichtskomponente kann es sich zum Beispiel um einen Energiespeicher zur Versorgung des Elektroantriebs handeln.

Insbesondere bevorzugt ist eine Ausführungsform, bei welcher der Einachsgeräteträger eine Steuerung aufweist, um den Einachsgeräteträger autonom auf einer Arbeitsfläche zu manövrieren. Der Einachsgeräteträger ist somit vorteilhaft dazu ausgebildet, die vollständige oder zumindest einen Teil der Arbeitsfläche autonom, das heisst ohne Verwendung von externen Steuerbefehlen, zu bearbeiten.

In einer einfachen Ausführungsform kann die Steuerung dazu ausgebildet sein, den Einachsgeräteträger im Zufallsprinzip über die Arbeitsfläche zu manövrieren. Bei einer bevorzugteren Ausführungsform ist die Steuerung jedoch dazu ausgebildet, den Einachsgeräteträger nach einem bestimmten Muster, zum Beispiel in parallelen Bahnen, systematisch über die Arbeitsfläche zu manövrieren. Ein systematisches Muster erlaubt eine effizientere Bearbeitung mit weniger Energieaufwand. Unabhängig davon, nach welchem Prinzip die Arbeitsfläche bearbeitet wird, ist die Steuerung vorteilhaft dazu ausgebildet, den Einachsgeräteträger autonom zu einer Ladestation zu manövrieren, zum Beispiel nach einer bestimmten Zeit oder wenn der Ladezustand des Energiespeichers unter einen bestimmten Wert gesunken ist.

Um das autonome Manövrieren auf der Arbeitsfläche zu erleichtern, weist der Einachsgeräteträger bevorzugt einen oder mehrere mit der Steuerung verbundene Sensoren auf, wie insbesondere einen 3D-Sensor zum Beispiel in Form eines Laserscanners, einen Global Positioning System (GPS)-Sensor, einen differential Global Navigation Satellite System (dGNSS)-Sensor, einen Global System for Mobile Communication (GSM)-Chip, eine Wireless Local Area Network (WLAN)-Einheit und/oder einen Bluetooth-Chip. Des Weiteren können Sensoren zur Erkennung von Hindernissen und/oder Lebewesen auf der Arbeitsfläche vorgesehen sein, wie zum Beispiel ein Laserscanner, eine 3D-Kamera, eine Wärmebildkamera und/oder eine dem Anbaugerät vorgelagerte mechanische Hinderniserkennungsvorrichtung.

In einer besonders bevorzugten Ausführungsform weist der Einachsgeräteträger ausserdem eine Kontrolleinheit auf, welche dazu ausgebildet ist, die Position der Antriebsachse relativ zum Schwerpunkt des Einachsgeräteträgers selbsttätig anzupassen. Die Kontrolleinheit ist somit bevorzugt dazu ausgebildet, die Position der Antriebsachse relativ zum Schwerpunkt, insbesondere zum Fahrgestell, selbsttätig, das heisst ohne Verwendung von externen Steuerbefehlen, anzupassen. Mit einer solchen Kontrolleinheit kann der Einachsgeräteträger das Anbaugerät zum Beispiel bei Erkennen eines Hindernisses oder bei einem Wendemanöver selbsttätig anheben und/oder die Eigenstabilität bei Fahrten im steilen Gelände selbsttätig optimieren. Vorteilhaft ist die Kontrolleinheit dazu ausgebildet, die Position der Antriebsachse relativ zum Schwerpunkt während des bestimmungsgemässen Bearbeitungsvorgangs der Arbeitsfläche kontinuierlich zu regulieren.

Vorteilhaft ist die Kontrolleinheit dazu ausgebildet, die Position der Antriebsachse relativ zum Schwerpunkt des Einachsgeräteträgers in Abhängigkeit von Messwerten anzupassen, welche von einem Neigungssensor empfangen werden, der die Neigung des Einachsgeräteträgers relativ zur Gravitationskraftrichtung misst, und/oder welche von einem oder mehreren Kraftsensoren empfangen werden, die die Auflagekraft des Anbaugeräts auf der Arbeitsfläche messen. Der Neigungssensor und die Kraftsensoren können jeweils am Fahrgestellt angebracht sein und einen Teil des Einachsgeräteträgers bilden oder sie können zum Beispiel am Anbaugerät angebracht sein. Insbesondere im Falle der Kraftsensoren kann es sogar vorteilhaft sein, wenn diese direkt am Anbaugerät selbst angeordnet sind und die Auflagekraft somit unmittelbar an der relevanten Stelle messen. Der oder die Kraftsensoren können zum Beispiel jeweils als Dehnungsmessstreifen ausgebildet sein und die Biegung eines Elements des Anbaugeräts, wie zum Beispiel eines Holms, messen. Der Neigungssensor kann insbesondere als Teil einer inertialen Messeinheit (engl. inertial measurement unit, IMU) vorgesehen sein oder die Kontrolleinheit kann ausserdem mit einem oder mehreren Beschleunigungssensoren und/oder Drehratensensoren (zur Messung der Drehrate des Elektroantriebs) verbunden sein, um basierend auf den entsprechend empfangenen Messwerten, wie Neigung, Ausrichtung und Beschleunigungen des Einachsgeräteträgers, die Position der Antriebsachse relativ zum Schwerpunkt anzupassen.

Die Kontrolleinheit kann auch dazu ausgebildet sein, die Auflagekraft des Anbaugeräts auf der Arbeitsfläche basierend auf der bekannten Massenverteilung des Einachsgeräteträgers sowie der vom Neigungssensor gemessenen Neigung zu bestimmen. Die Kraftsensoren zum Messen der Auflagekraft können in diesem Fall entfallen, wodurch die Herstellung des Einachsgeräteträgers günstiger wird.

Die vorliegende Erfindung bezieht sich ausserdem auf eine Einachsgeräteeinheit umfassend einen Einachsgeräteträger, der wie oben beschrieben ausgebildet ist, sowie ein daran anbringbares Anbaugerät. Beim Anbaugerät kann es sich insbesondere um einen Mähbalken. Alternative kann es sich beim Anbaugerät aber zum Beispiel auch um einen Bandrechen, ein Mulchgerät, einen Schneeschieber, eine Schneefräse, ein Reinigungsgerät oder um einen Heuschieber handeln.

Bevorzugt ist die Position des Schwerpunkts des Einachsgeräteträgers relativ zur Antriebsachse derart verschiebbar, dass dadurch das Anbaugerät der Einachsgeräteeinheit, insbesondere wenn sich die Einachsgeräteeinheit in einem bezüglich der Gravitationskraft flachen, d.h. horizontalen Bereich der Arbeitsfläche befindet, bezüglich der Arbeitsfläche angehoben und gesenkt werden kann.

Die vorliegende Erfindung bezieht sich ausserdem auf ein Arbeitsmaschinensystem umfassend mehrere Einachsgeräteträger, welche jeweils wie oben angegeben ausgebildet sind. Die mehreren Einachsgeräteträger des Arbeitsmaschinensystems sind dabei zum gleichzeitigen autonomen Manövrieren auf der Arbeitsfläche ausgebildet. Bei einem derartigen Arbeitsmaschinensystem können die einzelnen Einachsgeräteträger, insbesondere Einachsgeräteeinheiten, jeweils verhältnismässig klein dimensioniert sein und aufgrund ihrer Vielzahl dennoch eine äusserst effiziente Bearbeitung der Arbeitsfläche erreichen. Die kleinere Dimensionierung führt nicht nur dazu, dass die einzelnen Einachsgeräteträger bzw. -einheiten leiser werden, sondern auch sicherer.

Um eine noch effizientere Bearbeitung der Arbeitsfläche zu ermöglichen, verfügen die mehreren Einachsgeräteträger des Arbeitsmaschinensystems vorteilhaft über Kommunikationsmittel, um das Manövrieren auf der Arbeitsfläche gegenseitig zu koordinieren.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer schematisch dargestellten erfindungsgemässen Ausführungsform einer Einachsgeräteeinheit mit einem Einachsgeräteträger und einem daran angebrachten Mähbalken;
- Fig. 2: eine Seitenansicht der Einachsgeräteeinheit der Fig. 1, mit der Antriebsachse in Grundstellung;
- Fig. 3a: eine Seitenansicht der Einachsgeräteeinheit der Fig. 1 in Aufwärtsfahrt und mit nach hinten verschobener Antriebsachse;
- Fig. 3b: eine Seitenansicht der Einachsgeräteeinheit der Fig. 1 in Abwärtsfahrt und mit nach vorne verschobener Antriebsachse;
- Fig. 4a: eine Seitenansicht der Einachsgeräteeinheit der Fig. 1, mit hinter der Antriebsachse liegendem Schwerpunkt;
- Fig. 4b: eine Seitenansicht der Einachsgeräteeinheit der Fig. 1, mit genau über der Antriebsachse liegendem Schwerpunkt;
- Fig. 5: eine perspektivische Ansicht des schematisch dargestellten Einachsgeräteträgers der Einachsgeräteeinheit der Fig. 1;
- Fig. 6: eine perspektivische Ansicht einer schematisch dargestellten weiteren erfindungsgemässen Ausführungsform einer Einachsgeräteeinheit mit einem Mähbalken und einer daran angebrachten mechanischen Hinderniserkennungsvorrichtung;
- Fig. 7a: eine schematische Seitenansicht einer Einachsgeräteeinheit gemäss einer weiteren erfindungsgemässen Ausführungsform mit Pendelachse, mit der Antriebsachse in Grundstellung;
- Fig. 7b: eine Seitenansicht der Einachsgeräteeinheit der Fig. 7a, mit nach hinten verschobener Antriebsachse; sowie
- Fig. 8: eine Seitenansicht der Einachsgeräteeinheit der Fig. 1, mit sichtbar gemachtem, schematisch dargestelltem Innenleben.

### BESCHREIBUNG BEVORZUGTER AUSFÜHRUNGSFORMEN

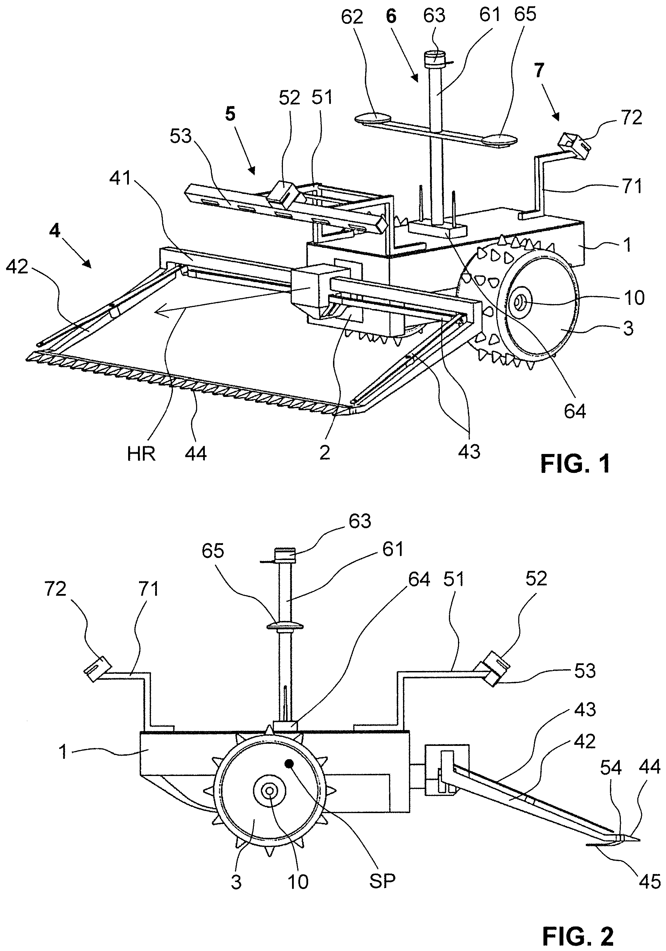

In den Figuren 1 bis 8 sind verschiedene Ausführungsformen von erfindungsgemässen Einachsgeräteeinheiten und insbesondere Einachsgeräteträgern in jeweils schematischer Darstellung gezeigt. Elemente, welche identisch oder ähnlich ausgebildet sind und/oder eine identische oder ähnliche Funktion erfüllen, sind bei den verschiedenen Ausführungsformen jeweils mit demselben Bezugszeichen versehen.

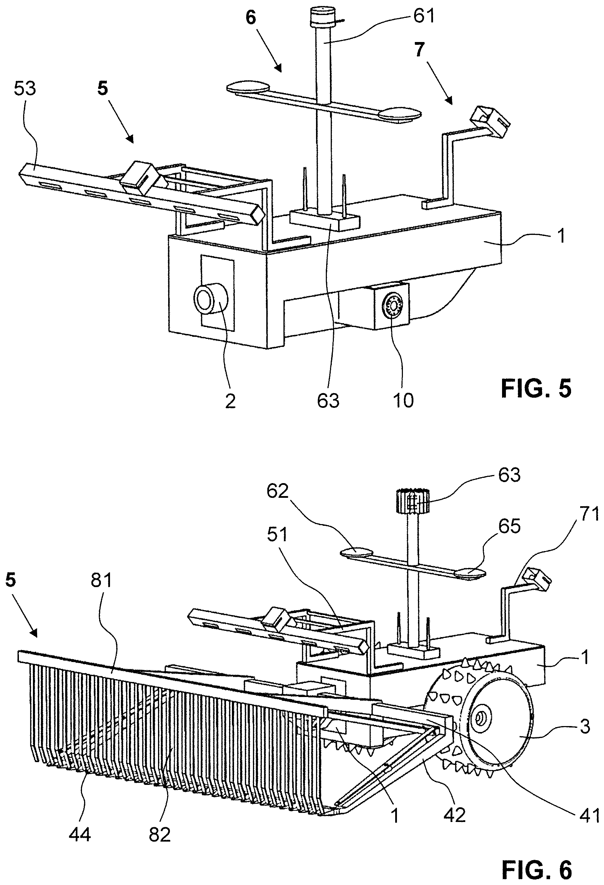

In den Figuren 1 bis 4b und 8 ist eine erste Ausführungsform einer Einachsgeräteeinheit gezeigt. Die Einachsgeräteeinheit der Figuren 1 bis 4b und 8 weist einen Einachsgeräteträger auf, der in der Figur 5 in Alleinstellung gezeigt ist. An den Einachsgeräteträger sind, wie in den Figuren 1 bis 4b gezeigt, ein Anbaugerät, zum Beispiel in Form eines Mähbalkens 4, sowie Räder, zum Beispiel in Form von Stachelrädern 3, anbringbar. Zusammen mit den Anbaugerät bildet der Einachsgeräteträger eine Einachsgeräteeinheit, umgangssprachlich auch Einachser, Einachsschlepper oder Einachstraktor genannt. Wenn es sich beim Anbaugerät um einen Mähbalken 4 handelt, wird insbesondere von einem Balkenmäher gesprochen.

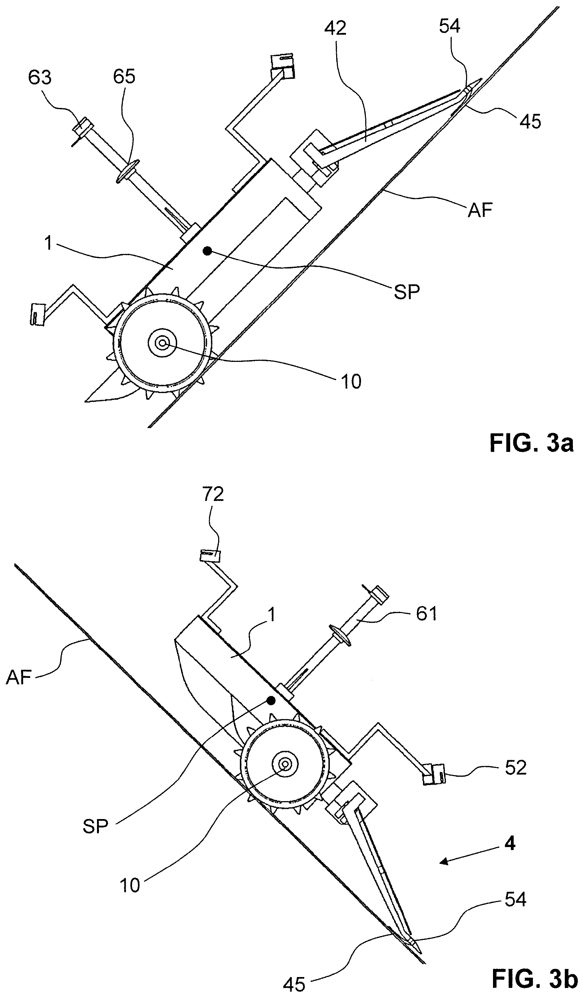

Beim Anbaugerät muss es sich nicht unbedingt um einen Mähbalken 4, wie in den Figuren gezeigt, handeln. Auch das Anbringen eines Pflugs, Mulchers, Bandrechens, einer Kehrmaschine, Schneefräse, Spritze oder Pumpe als Anbaugerät ist denkbar. Vorteilhaft sind sogar mehrere unterschiedliche Anbaugeräte an denselben Einachsgeräteträger montierbar. Wie in der Figur 1 gezeigt ist, weist der Einachsgeräteträger eine Hauptfahrtrichtung HR auf, welche die Richtung darstellt, entlang welcher sich der Einachsgeräteträger bei der bestimmungsgemässen Bearbeitung einer Arbeitsfläche AF (siehe Figuren 3a bis 4b) zu einem überwiegenden Grossteil seiner Einsatzzeit fortbewegt. Das Anbaugerät ist bevorzugt bezogen auf die Hauptfahrtrichtung HR vorne am Einachsgeräteträger angeordnet. Grundsätzlich kann es aber auch hinten, seitlich, oben und/oder unten am Einachsgeräteträger angeordnet sein.

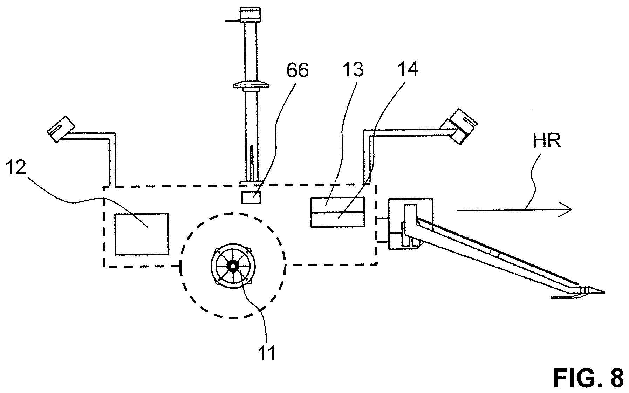

Der Einachsgeräteträger weist, wie es in der Figur 1 gezeigt ist, ein Fahrgestell 1, einen Elektroantrieb sowie eine vom Elektroantrieb antreibbare Antriebsachse 10 auf. Der Elektroantrieb ist bevorzugt in Form eines Elektromotors 11 ausgebildet, der, wie es in der Figur 8 dargestellt ist, konzentrisch zur Antriebsachse 10 angeordnet sein kann. Der Elektromotor 11 kann, muss aber nicht, zusammen mit der Antriebsachse 10 mitverschiebbar sein. Beim Antreiben der Antriebsachse 10 mittels des Elektromotors 10 werden an der Antriebsachse 10 drehfest angebrachte Räder, vorteilhaft in Form von Stachelrädern 3, in Drehung versetzt und die gesamte Einachsgeräteeinheit dadurch über die Arbeitsfläche AF bewegt.

Am Fahrgestell 1 ist via einen Adapter 2 ein Mähbalken 4 angebracht. Der Adapter 2 bildet einen Teil des Antriebsstrangs zum Antreiben des Anbaugeräts und ist vorteilhaft zum Anschliessen von unterschiedlichen Anbaugeräten ausgebildet. Der Antrieb zum Antreiben des Anbaugeräts kann durch einen eigens dafür vorgesehenen Motor, insbesondere Elektromotor, gebildet sein, oder er kann durch denselben Elektroantrieb, also hier durch den Elektromotor 11, gebildet sein, der auch die Antriebsachse 10 antreibt.

Zur Versorgung des Elektromotors 11 mit elektrischer Energie weist der Einachsgeräteträger einen Energiespeicher 12, insbesondere in Form einer wiederaufladbaren Batterie, auf (siehe Figur 8).

Der Mähbalken 4 weist seitliche Ausleger 41 auf, an deren Enden jeweils entlang der Hauptfahrtrichtung HR nach vorne und nach unten ragende Balkenholme 42 angebracht sind. An den vorderen Enden der sich parallel zueinander erstreckenden Balkenholme 42 ist das Schneidmesser 44 angebracht, welches sich quer zur Hauptfahrtrichtung HR erstreckt und nach vorne hin gewandte Schneidklingen aufweist. An den Auslegern 41 und den Balkenholmen 42 ist ein Antriebsgestänge 43 angebracht, um als Teil des Antriebsstrangs die Antriebsbewegung vom Adapter 2 auf das Schneidmesser 44 zu übertragen.

An den seitlichen Enden des Schneidmessers 44 ist jeweils auf der Unterseite eine Kufe 45 befestigt. Bei der Bodenbearbeitung, also während des Mähvorgangs, liegen diese Kufen 45 auf dem Boden bzw. der Arbeitsfläche AF auf und definieren dadurch die Schnitthöhe.

Auf der Oberseite des Fahrgestells 1 sind eine vordere Sensoreinheit 5, eine mittlere Sensoreinheit 6 und eine hintere Sensoreinheit 7 angebracht. Während die vordere Sensoreinheit 5 und die hintere Sensoreinheit 7 hauptsächlich zur Erfassung der näheren Umgebung und insbesondere zur Hinderniserkennung und zur Sicherheit dienen, dient die mittlere Sensoreinheit 6 hauptsächlich zur Lage- und Positionsbestimmung innerhalb der Arbeitsfläche AF.

Die vordere Sensoreinheit 5 weist einen Träger 51 zur Halterung eines vorderen Laserscanners 52 sowie einer Kameraeinheit 53 auf. Der vordere Laserscanner 52 dient im Einsatz der Einachsgeräteeinheit zum Erfassen der Umgebung unmittelbar vor und im Bereich des Anbaugeräts, insbesondere des Schneidmessers 44. Die Kameraeinheit 53 dient ebenfalls zum Erfassen der Umgebung vor und im Bereich des Mähbalkens 4. Sie kann insbesondere eine Wärmebildkamera aufweisen, um beispielsweise sich im Gras versteckende oder schlafende Tiere zu detektieren.

Zur vorderen Sensoreinheit 5 gehören ausserdem Kraftsensoren 54, welche im vorliegenden Ausführungsbeispiel jeweils in den Befestigungsbereichen der Kufen 45 am Mähbalken 4 angeordnet sind. Die Kraftsensoren 54 dienen zum Messen der auf den Kufen 45 lastenden Kraft, das heisst der Auflagekraft des Mähbalkens 4 auf der Arbeitsfläche AF.

Die mittlere Sensoreinheit 6 weist einen Sensormast 61 auf, an dem ein erster Positionierungssensor 62, ein 3D-Sensor wie zum Beispiel ein Laserscanner 63, eine 3D-Kamera, ein Radar oder ein Ultraschallsensor, und ein zweiter Positionierungssensor 65 angebracht sind. Ausserdem gehört eine direkt auf der Oberseite des Fahrgestells 1 angeordnete Mobilkommunikationseinheit 64 zur mittleren Sensoreinheit 6. Beim ersten und zweiten Positionierungssensor 62, 65 kann es sich jeweils insbesondere um einen GPS-Sensor und/oder einen dGNSS-Sensor handeln, welche zur Bestimmung der Position der Einachsgeräteeinheit innerhalb der Arbeitsfläche AF dienen. Indem zwei Positionierungssensoren 62 und 65 vorhanden sind, kann bei bekanntem Abstand der beiden Sensoren zusätzlich auch die Orientierung der Einachsgeräteeinheit bestimmt werden. Der Laserscanner 63 dient bevorzugt zum Erfassen der Umgebung um die Einachsgeräteeinheit herum. Er deckt hierzu vorteilhaft einen Winkelbereich von 360° ab. Der Laserscanner 63 kann beispielsweise zum Detektieren der Aussengrenzen der Arbeitsfläche AF benutzt werden, insbesondere, wenn diese geeignet, zum Beispiel mit Reflektoren, markiert sind. Alternativ oder zusätzlich kann der Laserscanner 63 aber auch zur Detektion von Hindernissen dienen. Die Mobilkommunikationseinheit 64 kann zur GSM-Ortung eingesetzt werden und/oder zur Kommunikation mit einem externen Gerät, wie beispielsweise eines Smartphones, um die Einachsgeräteeinheit zum Beispiel ein- und auszuschalten oder zu programmieren.

Zur mittleren Sensoreinheit 6 gehört ausserdem eine inertiale Messeinheit 66, welche im Inneren des Fahrgestells 1 angeordnet sein kann, wie dies in der Figur 8 dargestellt ist. Die inertiale Messeinheit 66 kann einen oder mehrere Beschleunigungssensoren und/oder Drehratensensoren und/oder Magnetfeldsensoren zum Bestimmen der Lage der Einachsgeräteeinheit relativ zur Gravitationsrichtung und/oder zur Nordrichtung, der Beschleunigung und/oder der Geschwindigkeit der Einachsgeräteeinheit aufweisen.

Die hintere Sensoreinheit 7 weist einen an einem Träger 71 angebrachten hinteren Laserscanner 72 auf. Der hintere Laserscanner 72 dient im Einsatz zum Erfassen der Umgebung im Bereich unmittelbar hinter der Einachsgeräteeinheit, was insbesondere beim Wenden der Einachsgeräteeinheit wichtig sein kann.

Die Elemente der vorderen, mittleren und hinteren Sensoreinheit 5, 6, 7 sind jeweils mit einer Steuerung 13 und einer Kontrolleinheit 14 der Einachsgeräteeinheit verbunden. Die Steuerung 13 und Kontrolleinheit 14 sind jeweils innerhalb des Fahrgestells 1 untergebracht, wie dies in der Figur 8 ersichtlich ist. Während die Steuerung 13 zum Manövrieren der Einachsgeräteeinheit über die Arbeitsfläche AF ausgebildet ist, ist die Kontrolleinheit 14 dazu ausgebildet, die Position der Antriebsachse 10 relativ zum Schwerpunkt SP der Einachsgeräteeinheit und somit des Einachsgeräteträgers zu regeln. Hierzu verarbeiten die Steuerung 13 und die Kontrolleinheit 14 die von den Sensoreinheiten 5, 6 und 7 empfangenen Daten bevorzugt jeweils autonom. Die Steuerung 13 und die Kontrolleinheit 14 können selbstverständlich durch eine gemeinsame und auf einer einzigen Leiterplatte angeordnete Rechnereinheit gebildet werden.

Die Verschiebbarkeit der Antriebsachse 10 relativ zum Schwerpunkt SP der Einachsgeräteeinheit und die damit einhergehenden Vorteile sind insbesondere in den Figuren 3a bis 4b gut ersichtlich.

Eine Aufwärtsfahrt im Steilgelände, wie in der Figur 3a dargestellt, kann von der Kontrolleinheit 14 aufgrund der von den Sensoreinheiten 5, 6 und 7 empfangenen Daten detektiert werden. Um die Einachsgeräteeinheit in diesem Fall stabiler zu machen und vor einem Verkippen zu schützen, wird die Antriebsachse 10 von der Kontrolleinheit 14 nach hinten verschoben, so dass sich der Schwerpunkt SP der Einachsgeräteeinheit vor der Antriebsachse 10 befindet. Die Auflagekraft des Mähbalkens 4 auf der Arbeitsfläche AF ist dadurch weiterhin ausreichend gross, und die Einachsgeräteeinheit kann nicht nach hinten verkippen.

Bei einer Abwärtsfahrt wird die Antriebsachse 10 hingegen, wie in der Figur 3b gezeigt, nach vorne, das heisst näher zum Mähbalken 4 hin, verschoben. Auf diese Weise wird erreicht, dass die Auflagekraft des Mähbalkens 4 auf der Arbeitsfläche AF 44 nicht zu gross wird und sich das Schneidmesser 44 im Boden verhakt. Zudem wird dadurch die Gefahr verringert, dass die Einachsgeräteeinheit nach vorne hin verkippt.

Für den eigentlichen Mähvorgang wird die Position der Antriebsachse 10 relativ zum Schwerpunkt SP von der Kontrolleinheit 14 bevorzugt derart geregelt, dass die Auflagekraft des Anbaugeräts, also hier des Mähbalkens 4, auf der Arbeitsfläche AF ungefähr konstant bleibt. Bei einer solchen einfachen Regelung werden automatisch die in den Figuren 3a und 3b dargestellten Positionen der Antriebsachse 10 relativ zum Schwerpunkt SP eingenommen.

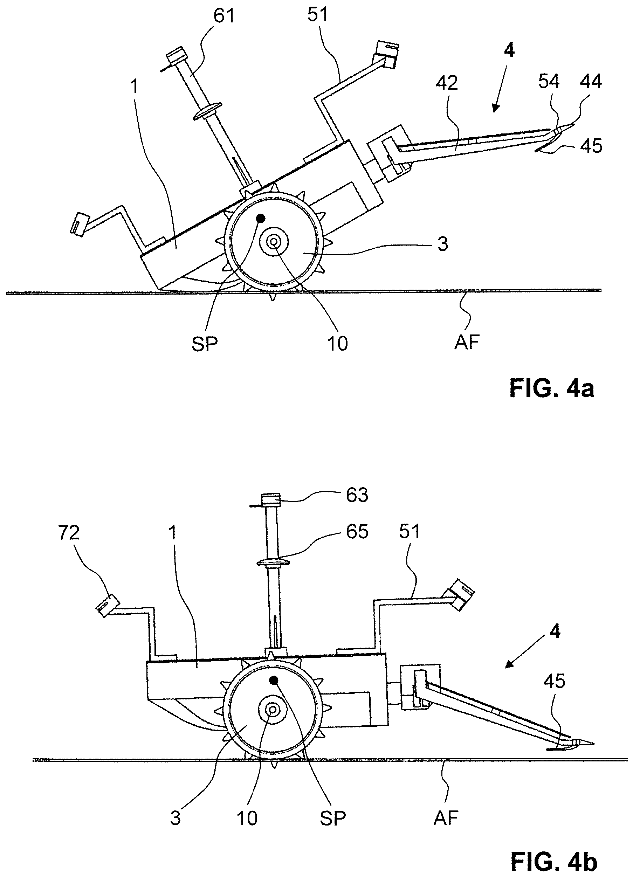

Im flachen Gelände kann der Mähbalken 4 gegenüber der Arbeitsfläche AF angehoben werden, indem die Antriebsachse 10 hinter den Schwerpunkt SP verschoben wird, wie dies in der Fig. 4a gezeigt ist. Dies ist zum Beispiel bei Detektion eines Hindernisses oder beim Wenden nützlich.

Indem die Antriebsachse 10, wie in der Figur 4b dargestellt, direkt an die Stelle des Schwerpunkts verschoben wird, kann der Mähbalken 4 gegenüber der Arbeitsfläche AF nur leicht angehoben und in dieser Position balanciert werden. In dieser Position der Antriebsachse 10 kann sich die Einachsgeräteeinheit sehr schnell und mit verhältnismässig wenig Energieaufwand über die Arbeitsfläche bewegen, was beispielsweise beim Wenden und beim Aufsuchen einer Ladestation nützlich ist.

In der Figur 6 ist eine Ausführungsform gezeigt, bei welcher am Mähbalken 4 zusätzlich eine mechanische Hinderniserkennungsvorrichtung 8 angebracht ist. Die mechanische Hinderniserkennungsvorrichtung 8 ist dem Mähbalken 4 vorgelagert und dient zur Erhöhung der Sicherheit. Die mechanische Hinderniserkennungsvorrichtung 8 weist einen oberhalb und leicht vorne vom Schneidmesser 44 angeordneten horizontalen Balken 81 auf, an welchem ein taktiler Vorhang 82 angebracht ist. Der taktile Vorhang 82 weist eine Vielzahl von beweglich am Balken 81 angehängten Stäben auf, die bis in den Bereich des Schneidmessers 44 nach unten ragen. Vorteilhaft sind die Stäbe jeweils mit einem gewissen um den Balken 81 herum wirkenden Drehmoment nach vorne hin federbelastet. Wenn die Einachsgeräteeinheit auf ein Hindernis mit einer gewissen Festigkeit stösst, werden einer oder mehrere Stäbe des taktilen Vorhangs 82 nach hinten gedrückt, wodurch ein entsprechendes Signal ausgelöst und an die Steuerung 13 und/oder die Kontrolleinheit 14 gesandt wird. Die Einachsgeräteeinheit kann dann zum Beispiel gestoppt werden.

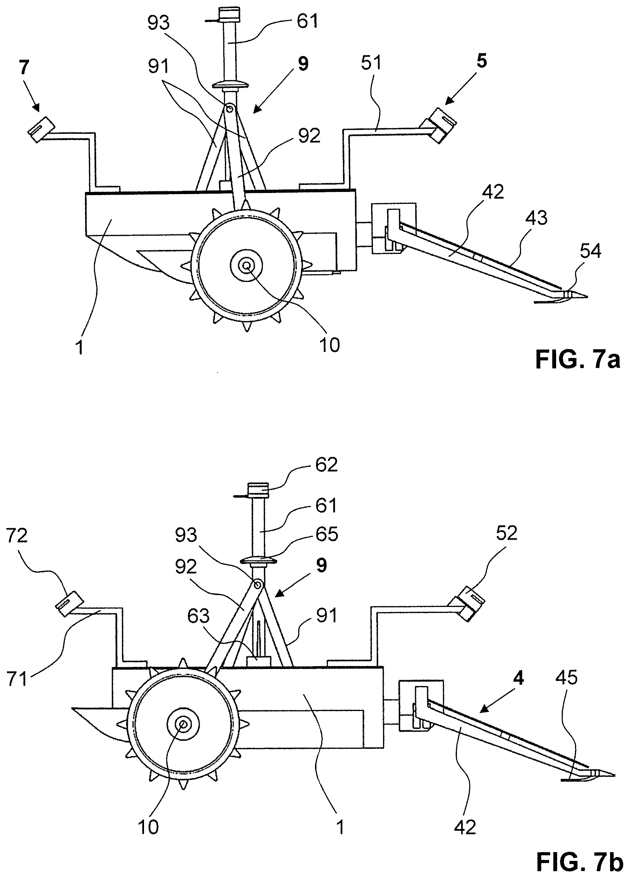

In den Figuren 7a und 7b ist eine Einachsgeräteeinheit mit einer Pendelachsaufhängung 9 gezeigt. Die Pendelachsaufhängung 9 weist ein Pendelelement 92 auf, welches mit einem ersten Ende via ein Gelenk 93 am Fahrgestell 1 angebracht ist. In einem zweiten Ende des Pendelelements 92 ist die Antriebsachse 10 gelagert. Um die Verschiebbarkeit der Antriebsachse 10 relativ zum Fahrgestell 1 zu erhöhen, sind Stützstreben 91 vorgesehen, welche eine gegenüber dem Fahrgestell 1 erhöhte Lage des Gelenks 93 ermöglichen.

Die vorstehende Erfindung ist selbstverständlich nicht auf die vorliegende Ausführungsformen beschränkt und eine Vielzahl von Abwandlungen ist möglich. So muss der Einachsgeräteträger zum Beispiel nicht zwingend eine Steuerung zum autonomen Manövrieren aufweisen. Der Einachsgeräteträger kann auch herkömmlich von einem hinter der Maschine hergehenden Bediener gelenkt werden, oder der Einachsgeräteträger kann mittels Fernbedienung manövrierbar sein. Durch das Verschieben der Antriebsachse relativ zum Schwerpunkt gestaltet sich die Arbeit des Bedieners auch dann einfach. Auch wenn dies nicht in jedem Fall vorteilhaft ist, so kann doch auf einige oder sogar sämtliche der beschriebenen Sensoren 52-54, 62-66, 72 und 82 grundsätzlich auch verzichtet werden.

### BEZUGSZEICHENLISTE

| | | | |
|---|---|---|---|
| 1 | Fahrgestell | 7 | Hintere Sensoreinheit |
| 2 | Adapter | 71 | Träger |
| 3 | Stachelrad | 72 | Hinterer Laserscanner |
| 4 | Mähbalken | 8 | Mechanische |
| 41 | Ausleger | | Hinderniserkennungs- |
| 42 | Balkenholm | | vorrichtung |
| 43 | Antriebsgestänge | 81 | Balken |
| 44 | Schneidmesser | 82 | Taktiler Vorhang |
| 45 | Kufe | 9 | Pendelachsaufhängung |
| 5 | Vordere Sensoreinheit | 91 | Stützstrebe |
| 51 | Träger | 92 | Pendelelement |
| 52 | Vorderer Laserscanner | 93 | Gelenk |
| 53 | Kameraeinheit | | |
| 54 | Kraftsensor | 10 | Antriebsachse |
| | | 11 | Elektromotor |
| 6 | Mittlere Sensoreinheit | 12 | Energiespeicher |
| 61 | Sensormast | | |
| 62 | Positionierungssensor | 13 | Steuerung |
| 63 | Laserscanner | 14 | Kontrolleinheit |
| 64 | Mobilkommunikationseinheit | | |
| 65 | Positionierungssensor | SP | Schwerpunkt |
| 66 | Inertiale Messeinheit | AF | Arbeitsfläche |
| | | HR | Hauptfahrtrichtung |

## Patentansprüche

1. Einachsgeräteträger, an welchen eines oder mehrere Anbaugeräte, wie insbesondere ein Mähbalken (4), anbringbar sind, aufweisend
ein Fahrgestell (1),
einen Elektroantrieb (11), sowie
eine Antriebsachse (10), welche vom Elektroantrieb (11) antreibbar ist, um den Einachsgeräteträger über eine Arbeitsfläche (AF) zu bewegen,
**dadurch gekennzeichnet, dass**
die Position des Schwerpunkts (SP) des Einachsgeräteträgers relativ zur Antriebsachse (10) mittels Verschieben der Antriebsachse (10) relativ zum Fahrgestell (1) veränderbar ist, um die Auflagekraft des Anbaugeräts auf der Arbeitsfläche (AF) zu regulieren.

2. Einachsgeräteträger nach Anspruch 1, ausserdem aufweisend eine Steuerung (13), um den Einachsgeräteträger autonom auf einer Arbeitsfläche (AF) zu manövrieren.

3. Einachsgeräteträger nach Anspruch 1 oder 2 wobei die Antriebsachse (10) relativ zum Fahrgestell (1) einen Verschiebeweg entlang einer Hauptfahrtrichtung (HR) des Einachsgeräteträgers aufweist, der mindestens anderthalbfach, bevorzugter mindestens doppelt so lang ist wie der Abstand des Schwerpunkts (SP) des Einachsgeräteträgers zur Arbeitsfläche (AF).

4. Einachsgeräteträger nach einem der vorhergehenden Ansprüche, wobei die Antriebsachse (10) linear entlang einer Hauptfahrtrichtung (HR) des Einachsgeräteträgers relativ zum Schwerpunkt (SP) des Einachsgeräteträgers verschiebbar ist.

5. Einachsgeräteträger nach einem der vorhergehenden Ansprüche, wobei es sich bei der Antriebsachse (10) um eine gelenkig am Fahrgestell (1) aufgehängte Pendelachse handelt.

6. Einachsgeräteträger nach einem der vorhergehenden Ansprüche, ausserdem aufweisend eine Kontrolleinheit (14), welche dazu ausgebildet ist, die Position des Schwerpunkts (SP) des Einachsgeräteträgers relativ zur Antriebsachse (10) selbsttätig anzupassen.

7. Einachsgeräteträger nach Anspruch 6, wobei die Kontrolleinheit (14) dazu ausgebildet ist, die Position des Schwerpunkts (SP) des Einachsgeräteträgers relativ zur Antriebsachse (10) in Abhängigkeit von Messwerten anzupassen, welche von einem Neigungssensor (66) empfangen werden, der die Neigung des Einachsgeräteträgers relativ zur Gravitationskraftrichtung misst, und/oder welche von einem oder mehreren Kraftsensoren (54) empfangen werden, die die Auflagekraft des Anbaugeräts auf der Arbeitsfläche messen.

8. Einachsgeräteträger nach einem der vorhergehenden Ansprüche, ausserdem aufweisend einen oder mehrere Sensoren (52, 53, 63, 72, 8) zur Erkennung von Hindernissen und/oder Lebewesen auf der Arbeitsfläche (AF), wie insbesondere eine 3D-Kamera, eine Wärmebildkamera, einen Laserscanner (52, 63) und/oder eine dem Anbaugerät vorgelagerte mechanische Hinderniserkennungsvorrichtung (8).

9. Einachsgeräteeinheit umfassend einen Einachsgeräteträger nach einem der vorhergehenden Ansprüche sowie ein daran anbringbares Anbaugerät, wie insbesondere einen Mähbalken (4).

10. Einachsgeräteeinheit nach Anspruch 9, wobei die Position des Schwerpunkts (SP) des Einachsgeräteträgers relativ zur Antriebsachse (10) derart veränderbar ist, dass dadurch das Anbaugerät bezüglich der Arbeitsfläche (AF) angehoben und gesenkt werden kann.

11. Arbeitsmaschinensystem umfassend mehrere Einachsgeräteträger nach einem der Ansprüche 1 bis 8, wobei die mehreren Einachsgeräteträger zum gleichzeitigen autonomen Manövrieren auf der Arbeitsfläche (AF) ausgebildet sind.

12. Arbeitsmaschinensystem nach Anspruch 11, wobei die mehreren Einachsgeräteträger über Kommunikationsmittel verfügen, um das Manövrieren auf der Arbeitsfläche (AF) gegenseitig zu koordinieren.

## Claims

1. A single-axle tool carrier to which one or more attachment tools, such as in particular a cutter bar (4), can be attached, comprising
a chassis (1),
an electric drive (11), and
a drive axle (10) which can be driven by the electric drive (11), in order to move the single-axle tool carrier over a working surface (AF),
**characterized in that**
the position of the center of gravity (SP) of the single-axle tool carrier relative to the drive axle (10) can be changed by displacing the drive axle (10) relative to the chassis (1) in order to regulate the contact force of the attachment tool on the working surface (AF).

2. The single-axle tool carrier according to claim 1, additionally comprising a control (13) for autonomously maneuvering the single-axle tool carrier on a working surface (AF).

3. The single-axle tool carrier according to claim 1 or 2, wherein the drive axle (10) comprises a displacement path relative to the chassis (1) along a main direction of travel (HR) of the single-axle tool carrier, which is at least one and a half times, preferably at least twice as long as the distance from the center of gravity (SP) of the single-axle tool carrier to the working surface (AF).

4. The single-axle tool carrier according to one of the preceding claims, wherein the drive axle (10) is linearly displaceable along a main direction of travel (HR) of the single-axle tool carrier relative to the center of gravity (SP) of the single-axle tool carrier.

5. The single-axle tool carrier according to one of the preceding claims, wherein the drive axle (10) is a pendulum axle suspended in an articulated manner on the chassis (1).

6. The single-axle tool carrier according to one of the preceding claims, additionally comprising a control unit (14) which is configured to automatically adjust the position of the center of gravity (SP) of the single-axle tool carrier relative to the drive axle (10).

7. The single-axle tool carrier according to claim 6, wherein the control unit (14) is configured to adjust the position of the center of gravity (SP) of the single-axle tool carrier relative to the drive axle (10) as a function of measured values, which are received from an inclination sensor (66) that measures the inclination of the single-axle tool carrier relative to the direction of gravitational force, and/or which are received from one or more force sensors (54) that measure the contact force of the attachment tool on the working surface.

8. The single-axle tool carrier according to one of the preceding claims, additionally comprising one or more sensors (52, 53, 63, 72, 8) for detecting obstacles and/or living beings on the working surface (AF), such as in particular a 3D camera, a thermal imaging camera, a laser scanner (52, 63) and/or a mechanical obstacle detection device (8) located in front of the attachment tool.

9. A single-axle tool unit comprising a single-axle device carrier according to one of the preceding claims and an attachment tool that can be attached thereto, such as, in particular, a cutter bar (4).

10. The single-axle tool unit according to claim 9, wherein the position of the center of gravity (SP) of the single-axle tool carrier relative to the drive axle (10) can be changed in such a way that the attachment tool can be raised and lowered relative to the working surface (AF).

11. A work machine system comprising a plurality of single-axle tool carriers according to any one of claims 1 to 8, wherein the plurality of single-axle tool carriers are configured for simultaneous autonomous maneuvering on the working surface (AF).

12. The work machine system according to claim 11, wherein the plurality of single-axle tool carriers have communication means for mutually coordinating maneuvering on the working surface (AF).

## Revendications

1. Support d'outil à un essieu, sur lequel peuvent être montés un ou plusieurs outils accessoires, notamment une barre de coupe (4), comprenant
un châssis (1),
un entraînement électrique (11), ainsi que
un essieu d'entrainement (10), pouvant être entraîné par l'entraînement électrique (11) afin de déplacer le support d'outil à un essieu sur une surface de travail (AF),
**caractérisé en ce que**
la position du centre de gravité (SP) du support d'outil à un essieu peut être modifiée par rapport à l'essieu d'entraînement (10) en déplaçant l'essieu d'entraînement (10) par rapport au châssis (1), afin de réguler la force d'appui de l'outil accessoire sur la surface de travail (AF).

2. Le support d'outil à un essieu selon la revendication 1, comportant en outre une commande (13) pour manœuvrer le support d'outil à un essieu de manière autonome sur une surface de travail (AF).

3. Le support d'outil à un essieu selon la revendication 1 ou 2, dans lequel l'essieu d'entrainement (10) présente, par rapport au châssis (1), une course de déplacement le long d'une direction de déplacement principale (HR) du support d'outil à un essieu, qui est au moins une fois et demie, de préférence au moins deux fois plus longue que la distance entre le centre de gravité (SP) du support d'outil à un essieu et la surface de travail (AF).

4. Le support d'outil à un essieu selon l'une des revendications précédentes, dans lequel l'essieu d'entrainement (10) est déplaçable linéairement le long d'une direction de déplacement principale (HR) du support d'outil à un essieu par rapport au centre de gravité (SP) du support d'outil à un essieu.

5. Le support d'outil à un essieu selon l'une des revendications précédentes, dans lequel l'essieu d'entrainement (10) est un essieu oscillant suspendu de manière articulée au châssis (1).

6. Le support d'outil à un essieu selon l'une des revendications précédentes, comportant en outre une unité de contrôle (14), laquelle est conçue pour ajuster automatiquement la position du centre de gravité (SP) du support d'outil à un essieu par rapport à l'essieu d'entrainement (10).

7. Le support d'outil à un essieu selon la revendication 6, dans lequel l'unité de contrôle (14) est conçue pour ajuster la position du centre de gravité (SP) du support d'outil à un essieu par rapport à l'essieu d'entrainement (10) en fonction de valeurs mesurées, qui sont reçues par un capteur d'inclinaison (66) mesurant l'inclinaison du support d'outil à un essieu par rapport à la direction de la force de gravité, et/ou qui sont reçues par un ou plusieurs capteurs de force (54) mesurant la force d'appui de l'outil accessoire sur la surface de travail.

8. Le support d'outil à un essieu selon l'une des revendications précédentes, comprenant en outre un ou plusieurs capteurs (52, 53, 63, 72, 8) pour détecter des obstacles et/ou des êtres vivants sur la surface de travail (AF), tels qu'en particulier une caméra 3D, une caméra thermique, un scanner laser (52, 63) et/ou un dispositif mécanique de détection d'obstacles (8) situé devant l'outil accessoire.

9. Unité d'outil à un essieu comprenant un support d'outil à un essieu selon l'une des revendications précédentes ainsi qu'un outil accessoire pouvant y être fixé, tel qu'en particulier une barre de coupe (4).

10. L'unité d'outil à un essieu selon la revendication 9, dans laquelle la position du centre de gravité (SP) du support d'outil à un essieu peut être modifiée par rapport à l'essieu d'entraînement (10) de telle sorte que l'outil accessoire peut être relevé et abaissé par rapport à la surface de travail (AF).

11. Système de machine de travail comprenant plusieurs supports d'outil à un essieu selon l'une des revendications 1 à 8, lesquels plusieurs supports d'outil à un essieu étant conçus pour manœuvrer de manière autonome et simultanée sur la surface de travail (AF).

12. Système de machine de travail selon la revendication 11, dans lequel les plusieurs supports d'outil à un essieu disposent de moyens de communication pour coordonner entre eux les manœuvres sur la surface de travail (AF).
